Europäisches Patentamt

European Patent Office  (11) Publication number: **0 186 636**

Office européen des brevets  **A2**

(12) **EUROPEAN PATENT APPLICATION**

(21) Application number: **85850343.6**

(22) Date of filing: **28.10.85**

(51) Int. Cl.⁴: **F 16 F 3/10**
 **F 16 F 1/38**

(30) Priority: **19.11.84 SE 8405799**

(43) Date of publication of application:
 **02.07.86 Bulletin 86/27**

(84) Designated Contracting States:
 **AT BE CH DE FR GB IT LI NL**

(71) Applicant: **FORSHEDA INNOVATION AB**

 **S-330 12 Forsheda(SE)**

(72) Inventor: **Hallstedt, Göran**
 **Ekelundsvägen 5**
 **S-342 00 Alvesta(SE)**

(72) Inventor: **Sporre, Anders**
 **Gjuterigatan 5**
 **S-331 00 Värnamo(SE)**

(72) Inventor: **Hansson, Peter**
 **Skepparegatan 15**
 **S-302 38 Halmstad(SE)**

(74) Representative: **Linde, Leif**
 **Vernamo Patentbyrä AB P.O. Box 1**
 **S-270 11 Abbekas(SE)**

(54) **A vibration absorber and damper.**

(57) A damper which is adapted to support a static load of a device, for example an engine or a machine element, subjected to vibrations and movements and for pereventing transmission of and damping these vibrations and movements comprises damping means (6,8,10) consisting of elastomeric material and a device (12) separated from said damping means for supporting substantially the whole static load so that the static load does not exert any influence on the function of preventing transmission of vibrations and the damping function of the damping means consisting of elastomeric material.

Fig .1.

Croydon Printing Company Ltd.

EP 0 186 636 A2

The present invention relates to a damper for preventing transmission of vibrations and damping movements of a device, for example a motor or a machine element, and for supporting a static load of this device.

"Damping of movements" relates to the capacity of the damper to absorbe energy at low frequency movements owing to the hysteresis effect of the material of the damper. "Preventing transmission of vibrations" relates to the capacity of the damper to transmit to the support as little disturbing forces as possible at high frequencies (in the super critical region).

In dampers of the above kind the active parts are often constituted by damping means consisting of elastomeric material, for example rubber. Such dampers have the advantages of being simple and cheap to manufacture and of lacking such elements which are subjected to damages and break-down. If a damper consisting of elastomeric material shall present a good capacity of preventing transmission of vibrations it shall have small rigidity. Hithertofore, it has been difficult to comply with this requirement in dampers comprising elastomeric material in connection with such applications in which the dampers are subjected to a static load for example from the weight of the device of which transmission of vibrations shall be prevented and movements shall be damped. If a damping element consisting of elastomeric material is subjected to such a static load the rigidity of the damping element is increased causing a reduction of the capacity of preventing transmission of vibrations.

The object of the present invention is to provide a damper having a damping element consisting of elastomeric material, which in spite thereof and while maintaining its capacity of preventing transmission of vibrations and damping capacity can support static loads of the device from which transmission of vibrations shall be prevented and the movements of which shall be damped making it possible for the damper to support this device.

In order to comply with this object the damper according to the invention is characterized by the fact that it comprises a device separate from the damping elements consisting of elastomeric material, said device being adapted to support substantially the whole static load of the device subjected to vibrations and movements.

Thus, it is possible to adapt the damper according to the invention so as to support the device subjected to vibrations and movements, the static load being applied for example by the weight of the device subjected to vibrations and movements.

In a preferred damper according to the invention said load supporting device substantially lacks capacity of damping the vibrations and movements of the device subjected thereto by providing a load supporting device having a small energy absorbing capacity. This request is satisfied in a damper in which the load supporting device consists of a metal spring due to the fact that the rigidity of a metal spring is not increased when the spring is subjected to the static load and is not increased as a consequence of an increased frequency of the vibrations and movements of the device subjected thereto.

Thus, in a preferred embodiment of a damper according to the invention the damper is separated in two portions, one portion satisfying the function with regard to preventing transmission of vibrations and damping movements, and one portion supporting the static load. Thereby the capacity of the elastomeric material of the damper is optimized with regard to the function of preventing vibration transmission and the damping function. In a preferred embodiment of the damper according to the invention the damper comprises at least two damping elements positioned at a distance from each other, which are adapted to engage each other when a predetermined amplitude of the vibrations or movements are exceeded in order stepwise to increase the damping effect and the rigidity and positively restrict the amplitude of the movements.

A damper according to the invention is especially well suited to be used for engine mountings.

The invention is described in the following with reference to the accompanying drawings.

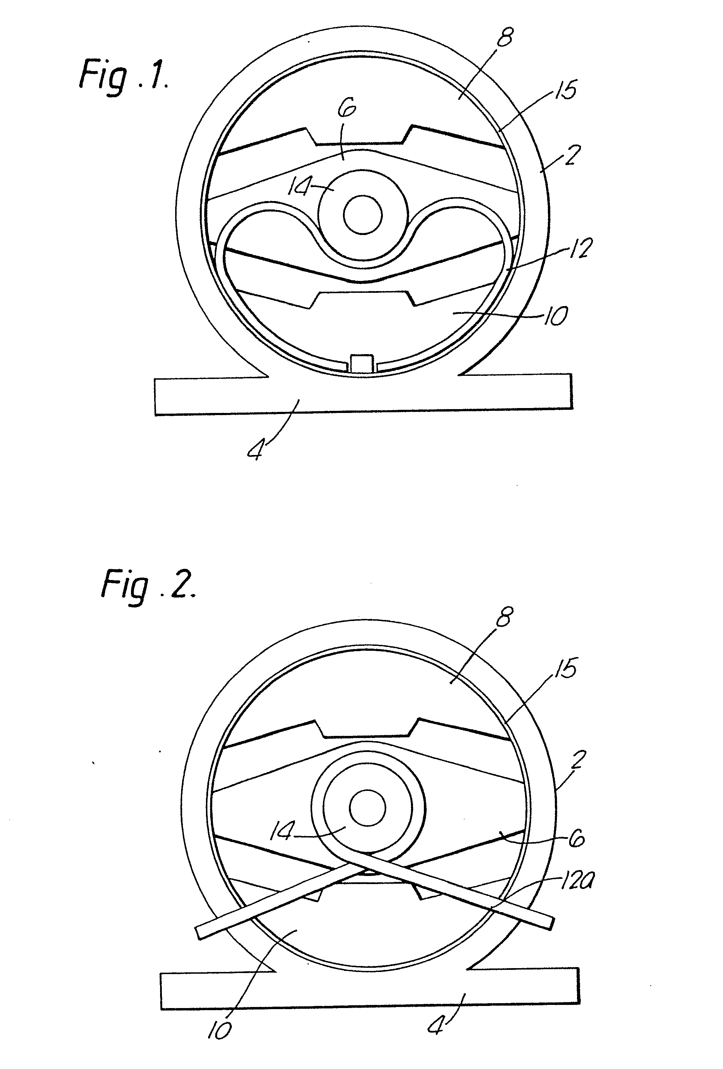

Figs 1-5 are side-views of different embodiments of dampers according to the invention.

All the dampers shown in the drawings are intended for supporting an engine on an engine bed. Thus, a suitable number of dampers are intended to be connected between the engine frame and the engine bed. All embodiments of the damper according to the invention comprise a cylindrical housing 2 having a base plate 4, which is adapted to be connected with the bed supporting the engine.

In the embodiment according to Fig. 1 there is in the cylindrical housing 2 positioned a damping device comprising three damping elements 6, 8 and 10 and a load supporting device consisting of two springs 12 which are positioned at one end each of the cylindrical housing 2 and of which only one is visible in Fig. 1.

The damping device comprises a central damping element 6, an upper damping element 8 and a lower damping element 10. The damping elements consist of a suitable elastomeric material, preferably rubber. Suitable rubber qualities are natural rubber and SBR. In the central damping element 6 there is provided a cylindrical pin 14 which is adapted to be connected with the frame of the engine which shall be supported by the damper and by additional dampers of the same kind.

The springs 12 consist of metal and are connected with the pin 14 for supporting the load of the engine connected with the pin. Thus, the springs 12 are so dimensioned that the pin 14 is supported in the position shown in Fig. 1, wherein the central damping element 6 is positioned at substantially the same distance from the upper damping element 8 as from the lower damping element 10. Thus, it should be noted that the damper of Fig. 1 as well as the dampers of the rest of the figures are shown in a loaded position.

Because of the fact that the entire weight of the engine is supported by the springs 12 of the dampers connected with the engine the elastomeric material damping elements of the dampers are not subjected to any static loading which would compress the elastomeric material so as to increasing the rigidity thereof and deteriorate the properties of the elastomeric material with regard to its ability to prevent transmission of vibrations and to damp other movements.

When the engine vibrates or moves at a small amplitude in relation to the bed, i.e. when the pin 14 vibrates and moves at a small amplitude in relation to the cylindrical housing 2 the vibrations are damped and prevented from being transmitted to the housing 2 only by means of the central damping element 6 having small dynamic rigidity. Because of the fact that the springs 12 supports and carries the static loading on the damper the capacity of the elastomeric material damping element 6 to provide damping and prevent transmission of vibrations can be optimally utilized. The properties of the springs 12 are such that the springs do substantially not at all have any influence on the damping effect because of the fact that they have small energy absorption. When the engine vibrates or moves at greater amplitudes, i.e. when a greater relative motion takes place between the pin 14 and the cylindrical housing 2 there is an engagement between the central damping element 6 and the upper damping element 8 and/or the lower damping element 10. At such an engagement there is a stepwise increase of the damping effect (energy absorption) and the rigidity of the damper. By means of a suitable adjustment of the distance between the damping elements and a suitable construction of the portions of the damping elements engaging each other it is possible to predetermine the damping effect and the allowable movements within wide limits.

The damping element 6 which shall have low dynamic rigidity can be manufactured from a low damping material, for example natural rubber. The damping elements 8 and 10 which shall have high dynamic rigidity and provide high damping (energy absorption) can be manufactured from the same material as the damping element 6 or a more high damping material, for example ethylene acrylic rubber. It is also possible to construct the damping elements 8 and 10 in such a way that they provide a hydraulic action in order further to increase the energy absorption capacity.

It is realized that at a predetermined size of the damping elements 6, 8 and 10 it is possible accurately to adjust the distance between the central damping element and the upper and the lower damping element by positioning the damping element in a housing 2 having a suitable inner diameter. It is possible to determine said distances in an exact way by positioning the damping element 6, 8 and 10 in a sleeve 15 of a shrinkable material which sleeve initially has such size that the damping elements are positioned at a greater distance from each other than the desired distance whereupon the sleeve 15 is shrinked to such an extent that the desired distances are obtained.

The embodiment of the damper according to the invention shown in Fig. 2 differs from the embodiment according to Fig. 1 only with regard to the construction of the load supporting springs. In Fig. 2 the visible spring is designated with reference numeral 12a.

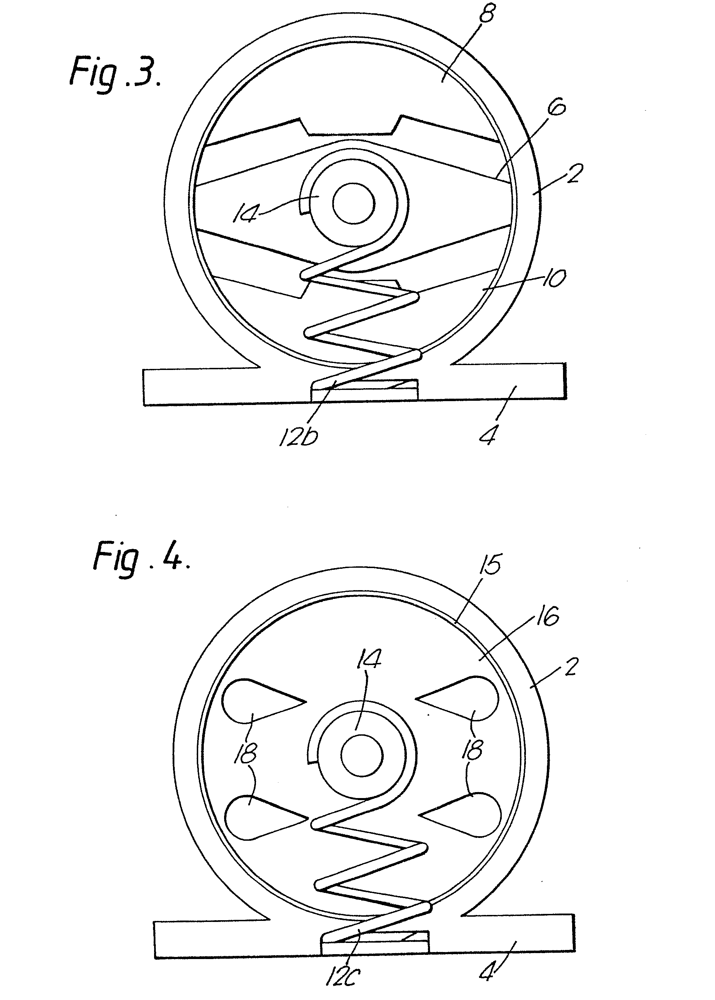

Also the embodiment of the damper according to the invention shown in Fig. 3 differs from the embodiments according to Figs 1 and 2 only in respect of the construction of the springs supporting the load. Thus, in the embodiment according to Fig. 3 these springs 12b are constituted by coil springs.

In the embodiment according to Fig. 4 the springs 12c supporting the load are constructed in substantially the same way as the springs 12b in the embodiment according to Fig. 3, i.e. as coil springs. The embodiment according to Fig. 4 differs from the embodiment according to Figs 1-3 with regard to the construction of the damping device. In accordance with Fig. 4 the damping device 16 consists of one single elastomeric material element in which a number of recesses 18 are provided. When using the damper according to Fig. 4 the damping action (energy absorption) and the rigidity of the damper accompanying an increasing amplitude of vibrations and movements are not stepwise increased but increase more continuously. It is of course possible to determine the relationship between the damping action (energy absorption) and the rigidity on one side and the amplitude on the other side by utilizing recesses of desired shape and number.

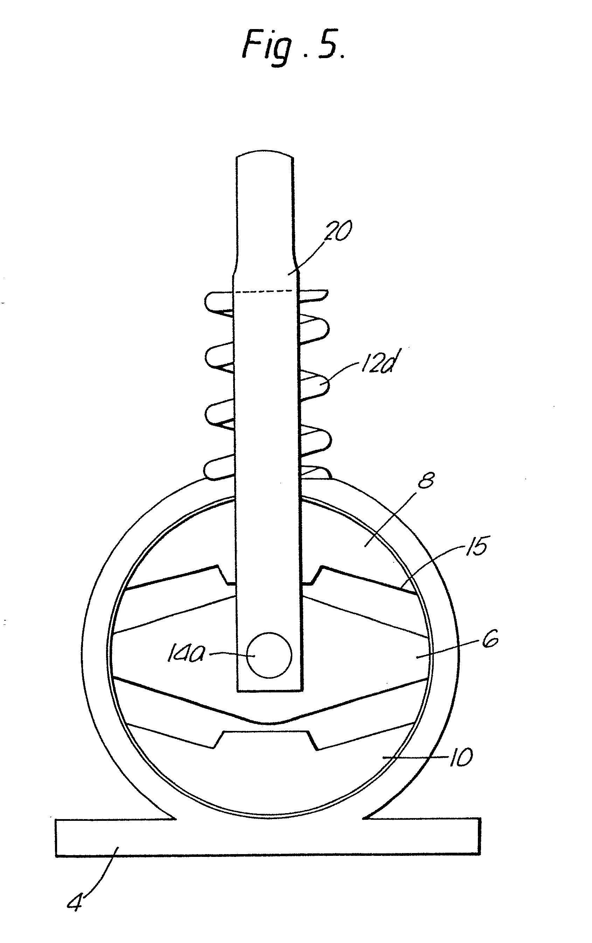

The embodiment of the damper according to the invention shown in Fig. 5 differs from the dampers according to Figs 1-3 in the respect that the engine is connected with the damper and the pin 14a thereof by means of a yoke 20, the load supporting spring being constituted by a compression spring 12d positioned between the top surface of the cylindrical housing 2 and the opposite surface of the yoke.

The invention can be modified within the scope of the following claims, especially with regard to the construction of the spring supporting the load. Thus, the spring may consist of another material than metal and be constructed in any desired manner as far as it satisfies the function of supporting the loads exerted on the damper so that these loads do substantially not at all have any influence on the function of the elastomeric material damping means.

CLAIMS

1. A damper for supporting a static load of a device, for example a motor or a machine element, subjected to vibrations and movements and for damping said vibrations and movements, comprising damping means (6, 8, 10) consisting of elastomeric material, c h a r a c t e r i z e d  by a device (12) separated from said elastomeric material damping means (6, 8, 10) for supporting substantially the whole static load of the device subjected to vibrations and movements.

2. A damper as claimed in claim 1, c h a r a c t e r i z e d  in that it is adapted to support the device subjected to vibrations and movements, the static load being applied by the weight of the device subjected to vibrations and movements.

3. A damper as claimed in claim 1 or 2, c h a r a c t e r i z e d  in that the load supporting device (12) substantially lacks capacity of damping the vibrations and movements of the device subjected to said vibrations and movements.

4. A damper as claimed in any of the preceding claims, c h a r a c t e r i z e d  in that the load supporting device is constituted by a metal spring (12).

5. A damper as claimed in any of the preceding claims, c h a r a c t e r i z e d  in that said damping means comprise at least two damping elements (6; 8, 10) positioned at a distance from each other and adapted to engage each other for providing a stepwise increasing damping action and rigidity of the damper when a predetermined amplitude of the vibrations or movements is exceeded.

6. A damper as claimed in claim 5, c h a r a c t e r i z e d  in that both damping elements (6; 8, 10) consist of elastomeric material.

7. A damper as claimed in claim 6, c h a r a c t e r i z e d  in that the distance between the damping elements (6; 8, 10) is defined by means of an element (15) connecting the damping elements with each other and consisting of a shrinkable material.

8. A damper as claimed in claim 7, c h a r a c t e r i z e d  in that the element (15) connecting the damping elements (6, 8, 10) with each other is positioned in a housing (2).

9. A damper as claimed in any of the preceding claims, c h a r a c t e r i z e d by a primary damping element (6) having a low dynamic rigidity and damping (energy absorption).

10. A damper as claimed in claim 9, c h a r a c t e r i z e d by a secondary damping element (8, 10) having a high dynamic rigidity and damping (energy absorption) which is adapted to be engaged by the primary damping elements (6) when the predetermined amplitude of the vibrations and movements is exceeded.

11. A damper as claimed in claim 9 and 10, c h a r a c t e r i z e d in that the primary damping element and the secondary damping element consist of different materials.

12. A damper as claimed in claim 10 or 11, c h a r a c t e r i z e d in that the secondary damping element (8, 10) includes a hydraulic action.

Fig .1.

Fig .2.

2/3

0186636

Fig. 3.

Fig. 4.

# Fig . 5.